(19) **Europäisches Patentamt**

**European Patent Office**

**Office européen des brevets**

(11) **EP 1 375 593 B1**

(12) **EUROPEAN PATENT SPECIFICATION**

(45) Date of publication and mention
of the grant of the patent:
**27.12.2006 Bulletin 2006/52**

(51) Int Cl.:
*C08L 75/04* (2006.01)    *C08K 5/092* (2006.01)
*C08K 5/098* (2006.01)    *C08L 57/04* (2006.01)

(21) Application number: **03014281.4**

(22) Date of filing: **25.06.2003**

(54) **Resin composition**

Harzmischung

Composition de résine

(84) Designated Contracting States:
**DE GB**

(30) Priority: **28.06.2002 JP 2002190302**

(43) Date of publication of application:
**02.01.2004 Bulletin 2004/01**

(73) Proprietor: **NIPPON SHOKUBAI CO., LTD.**
**Osaka-shi, Osaka 541-0043 (JP)**

(72) Inventors:
• **Saeki, Koichiro**
**Suita-shi,**
**Osaka 565-0818 (JP)**
• **Miyai, Takashi**
**Takatuski-shi,**
**Osaka 569-0854 (JP)**

• **Yokota, Yoshiyuki**
**Suita-shi,**
**Osaka 565-0841 (JP)**
• **Shiraishi, Tsugunori**
**Izumiotsu-shi,**
**Osaka 595-0024 (JP)**
• **Nakao, Kanji**
**Suita-shi,**
**Osaka 564-0035 (JP)**

(74) Representative: **Henkel, Feiler & Hänzel**
**Patentanwälte**
**Maximiliansplatz 21**
**80333 München (DE)**

(56) References cited:
**EP-A- 0 194 687**      **EP-A- 0 324 382**
**EP-A- 1 072 630**      **WO-A-02/10306**
**US-A- 4 049 869**      **US-A- 4 622 360**
**US-A- 5 681 880**

**Description**

**BACKGROUND OF THE INVENTION**

A. TECHNICAL FIELD

The present invention relates to a resin composition comprising a specific resin. More particularly, the present invention relates to a resin composition comprising a specific resin that is excellent in one-liquid stability.

B. BACKGROUND ART

It is reported that: if a multivalent metal compound is brought into coexistence with various common resins such as acrylic resins, then these resins can display the one-liquid curability (e.g. JP-A-047726/1979 and EP 0194687). The resultant resin compositions are expected to have practicability as one-liquid type curable resin compositions.

However, the one-liquid type curable resin compositions are frequently lacking in storage stability after their preparation, unlike two-liquid type ones which don't display their curability until being subjected to a two-liquid-mixing procedure in an execution place. Particularly, in the case where a urethane resin and/or a resin as obtained by polymerizing a monomer component including an $\alpha,\beta$-unsaturated carboxylic acid as an essential component is used as an essential resin component, there is a strong tendency such that the storage stability is deteriorated (e.g. thickening of liquids, enlargement of particle diameters, and gelation). Then, such lowering of the one-liquid stability remarkably deteriorates the workability due to thickening and solidification, and also has a bad influence upon such as design (e.g. coating-film appearance).

US-A-5 681 880 discloses that aqueous dispersions which comprise an emulsion polymer which is stable with respect to polyvalent zirconium ions, and a water-soluble zirconium compound, prevent the penetration of constituents from substrates which show a tendency to bleeding, and the dispersions are therefore suitable as a primer, especially for woods.

EP-A-0 324 382 discloses a crosslinkable anionic binder composition which comprises an emulsion copolymer containing acrylamidoglycolic acid (AGA) and a zirconium (III) salt of an alpha or beta hydroxycarboxylic acid, the pH of the composition being from about 1.5 to 4.5. EP-A-0 324 382 further discloses nonwoven binder compositions which are stable for extended periods prior to application of the binder composition onto the nonwoven substrate and initiation of crosslinking by application of heat.

**SUMMARY OF THE INVENTION**

A. OBJECT OF THE INVENTION

Accordingly, an object of the present invention is to provide a resin composition comprising: a urethane resin and/or a resin as obtained by polymerizing a monomer component including an $\alpha,\beta$-unsaturated carboxylic acid as an essential component; and a multivalent metal compound; which resin composition is excellent in the one-liquid stability and also in the coating-film appearance, coating-film adhesion, water-rubbing resistance, warm-water-whitening resistance, and blocking resistance.

B. DISCLOSURE OF THE INVENTION

The present inventors diligently studied to solve the above-mentioned problems. As a result, they have found out that: if tartaric acid and/or its salt is brought into coexistence with the resin composition comprising: the urethane resin and/or the resin as obtained by polymerizing a monomer component including an $\alpha,\beta$-unsaturated carboxylic acid as an essential component; and the multivalent metal compound (e.g. zirconium) that has a high valence and easily undergoes coordination by functional groups (e.g. hydroxyl groups); then the resin composition becomes excellent in the one-liquid stability and also in the coating-film appearance, coating-film adhesion, water-rubbing resistance, warm-water-whitening resistance, and blocking resistance.

That is to say, a resin composition, according to the present invention, comprises: a urethane resin and/or a resin as obtained by polymerizing a monomer component including an $\alpha,\beta$-unsaturated carboxylic acid as an essential component; ammonium zirconium carbonate as a multivalent metal compound in a mixing ratio of 0.1 to 50.0 weight% in the resin composition; and tartaric acid and/or its salt; wherein the mixing ratio of the tartaric acid and/or its salt is in a range of from 13.7 to 54.1 weight% relative to the weight of the metal atom in the multivalent metal compound.

The present invention resin composition comprises, as an essential resin component, at least one of the above urethane resin and the above resin as obtained by polymerizing a monomer component including an $\alpha,\beta$-unsaturated

carboxylic acid as an essential component, and can further comprise a resin other than these resins when the occasion demands. Although it does not matter what kind of resin such another resin is, yet the resin composition favorably further comprises a cationic resin essentially as such.

These and other objects and the advantages of the present invention will be more fully apparent from the following detailed disclosure.

## DETAILED DESCRIPTION OF THE INVENTION

The present invention resin composition comprises, as an essential component, the urethane resin and/or the resin as obtained by polymerizing a monomer component including an $\alpha,\beta$-unsaturated carboxylic acid as an essential component.

There is no especial limitation on the $\alpha,\beta$-unsaturated carboxylic acid as used for the resin obtained by polymerizing a monomer component including the $\alpha,\beta$-unsaturated carboxylic acid as an essential component, and examples thereof include: unsaturated monocarboxylic acids (e.g. (meth)acrylic acid, cinnamic acid, and crotonic acid); and unsaturated dicarboxylic acids (e.g. maleic acid, itaconic acid, and fumaric acid) and their monoesters. These may be used either alone respectively or in combinations with each other.

The monomer component, as used for the resin obtained by polymerizing the monomer component including the $\alpha,\beta$-unsaturated carboxylic acid as an essential component, can use, besides the above $\alpha,\beta$-unsaturated carboxylic acid as the essential component, other unsaturated monomers (copolymerizable with this $\alpha,\beta$-unsaturated carboxylic acid) as members of the aforementioned monomer component. There is no especial limitation on the unsaturated monomers copolymerizable with the $\alpha,\beta$-unsaturated carboxylic acid. Examples thereof include: (meth)acrylate esters, such as methyl (meth)acrylate, ethyl (meth)acrylate, butyl (meth)acrylate, 2-ethylhexyl (meth)acrylate, decyl (meth)acrylate, lauryl (meth)acrylate, isodecyl (meth)acrylate, oleyl (meth)acrylate, palmityl (meth)acrylate, stearyl (meth)acrylate, hydroxyethyl (meth)acrylate, and hydroxypropyl (meth)acrylate; cycloalkyl-group-containing polymerizable unsaturated monomers, such as cyclohexyl (meth)acrylate, 4-methylcyclohexyl (meth)acrylate, cyclohexylmethyl (meth)acrylate, and isobornyl (meth)acrylate; polymerizable unsaturated monomers containing a benzophenone type ultraviolet-absorbing group, such as 2,4-dihydroxybenzophenone; polymerizable unsaturated monomers containing a benzotriazole type ultraviolet-absorbing group, such as 2-[2'-hydroxy-5'-(methacryloyloxyethyl)phenyl]-2H-benzotriazole; polymerizable unsaturated monomers containing a piperidine type ultraviolet-stabilizing group, such as 4-(meth)acryloyloxy-2,2,6,6-tetramethylpiperidine and 4-(meth)acryloyloxy-1,2,2,6,6-pentamethylpiperidine; epoxy-group-containing polymerizable unsaturated monomers, such as glycidyl (meth)acrylate, 2-methylglycidyl (meth)acrylate, and allyl glycidyl ether; aziridinyl-group-containing polymerizable unsaturated monomers, such as (meth)acryloylaziridine and 2-aziridinylethyl (meth)acrylate; oxazoline-group-containing polymerizable unsaturated monomers, such as 2-isopropenyl-2-oxazoline and 2-vinyl-2-oxazoline; unsaturated amides, such as (meth)acrylamide, N-methylol(meth)acrylamide, and diacetone acrylamide; basic polymerizable unsaturated monomers, such as dimethylaminoethyl (meth)acrylate, dimethylaminoethyl(meth)acrylamide, vinylpiperidine, vinylimidazole, and vinylpyrrolidone; $\alpha,\beta$-unsaturated aromatic monomers, such as styrene, vinyltoluene, and $\alpha$-methylstyrene; cyano-group-containing unsaturated nitriles such as (meth)acrylonitrile; polyfunctional (meth)acrylate esters containing at least two polymerizable unsaturated groups per molecule, such as esters obtained from (meth)acrylic acid and polyhydric alcohols (e.g. ethylene glycol, 1,3-butylene glycol, diethylene glycol, polyethylene glycol, polypropylene glycol, and trimethylolpropane); polyfunctional vinyl compounds such as divinylbenzene; sulfonic-group-containing polymerizable unsaturated monomers, such as 2-sulfoethyl (meth)acrylate and its salts; vinyl esters, such as vinyl acetate and vinyl propionate; vinyl ethers, such as methyl vinyl ether and ethyl vinyl ether; $\alpha$-olefins, such as ethylene and propylene; and halogenated $\alpha,\beta$-unsaturated monomers, such as vinyl chloride, vinylidene chloride, and vinyl fluoride. These may be used either alone respectively or in combinations with each other.

There is no especial limitation on the polymerization method for the aforementioned monomer component including the $\alpha,\beta$-unsaturated carboxylic acid as an essential component, and publicly known polymerization methods are adoptable. The polymerization may be carried out by such as a solution polymerization method, an emulsion polymerization method, and a suspension polymerization method. In addition, the monomer component may be added to a reactor, for example, in a lump, or continuously or gradually by a method such as dropwise addition. Furthermore, during the polymerization, when the occasion demands, a portion of the resultant polymer resin may be crosslinked with a monomer containing at least two copolymerizable unsaturated groups per molecule (e.g. divinylbenzene), and the polymerization degree can also be controlled by using a chain transfer agent (e.g. t-dodecylmercaptan). Incidentally, the polymerization is more favorably carried out under an atmosphere of an inert gas such as nitrogen gas.

Favorable examples of the urethane resin include a urethane resin containing a carboxyl group in its molecule. There is no especial limitation on the urethane resin containing the carboxyl group in its molecule, but examples thereof include a urethane resin that is obtained from an active-hydrogen-containing compound and an organic polyisocyanate and has substantially no free isocyanate group.

EP 1 375 593 B1

The aforementioned urethane resin containing the carboxyl group in its molecule is generally obtainable from the organic polyisocyanate and the active-hydrogen-containing compound including at least one member selected from the group consisting of such as low-molecular polyols, high-molecular polyols, hydroxycarboxylic acids, and polyamines. Hereupon, the active-hydrogen-containing compound favorably includes at least the high-molecular polyol as an essential component. Specifically, for example, the urethane resin can be produced by such as a self-emulsifying process including the steps of polymerizing the organic polyisocyanate with such as the high-molecular polyol and the hydroxycarboxylic acid as the active-hydrogen-containing compounds to thereby prepare a prepolymer containing an isocyanate group at both opposite ends; and then neutralizing a carboxyl group moiety of the above prepolymer with basic compounds such as tertiary amines (e.g. triethylamine) and sodium hydroxide, thereby introducing a hydrophilic group into the molecular chain of the prepolymer to disperse it into water; and then causing the resultant prepolymer to react with active-hydrogen-containing compounds such as the polyamine and/or the low-molecular polyol. However, needless to say, the production process is not limited to the above process, but the urethane resin can be produced also by publicly known polymerization processes. Incidentally, although there is no especial limitation on the temperature during the polyurethane polymerization reaction, yet the polyurethane polymerization reaction is usually carried out in the temperature range of 40 to 140 ˚C, favorably 60 to 120 ˚C (however, in the case of the reaction with the polyamine, usually not higher than 80 ˚C, favorably in the range of 0 to 70 ˚C). In addition, the polyurethane polymerization reaction may be carried out in solvents such as dimethylformamide, dioxane, toluene, xylene, methyl ethyl ketone, methyl isobutyl ketone, ethyl acetate, butyl acetate, and cellosolve acetate, and the above solvents may be added in the course of the reaction or thereafter.

Examples of the low-molecular polyol as the aforementioned active-hydrogen-containing compound include: difunctional polyols, such as ethylene glycol, propylene glycol, 1,3- or 1,4-butanediol, 3-methylpentanediol, 1,6-hexanediol, neopentyl glycol, diethylene glycol, and cyclohexylene glycol; polyols containing at least three functional groups, such as glycerin, trimethylolpropane, pentaerythritol, sorbitol, and sucrose; and hydroxycarboxylic acids, such as lactic acid, tartaric acid, citric acid, salicylic acid, and dimethylolpropionic acid. Of these polyols, the ethylene glycol, the 1,4-butanediol, and the dimethylolpropionic acid are favorable. In addition, monohydric alcohols (e.g. methanol, ethanol, propanol, butanol, 2-hydroxyethyl (meth)acrylate, and 2-hydroxypropyl (meth)acrylate) may be partially used together.

Examples of the high-molecular polyol as the aforementioned active-hydrogen-containing compound include: polyether polyols, polyester polyols, polybutadiene polyols, hydrogenated polybutadiene polyols, acrylic polyols, polymer polyols, and mixtures including at least two of these polyols. Of these polyols, the polyether polyols and the polyester polyols are particularly favorable. More specifically, examples of the aforementioned polyether polyols include: alkylene oxide addition products from at least one member selected from the group consisting of the aforementioned low-molecular polyols, polyphenols (e.g. bisphenols such as bisphenol A), and amines (e.g. alkanol amines, such as monoethanolamine, diethanolamine, triethanolamine, and N-methyldiethanolamine; aliphatic polyamines, such as ethylenediamine, hexamethylenediamine, isophoronediamine, and diethylenetriamine; aromatic diamines, such as tolylenediamine and diphenylmethanediamine); and products obtained by ring-opening polymerization of alkylene oxides. Examples of the alkylene oxide in the alkylene oxide addition product include one or at least two alkylene oxides having 2 to 4 carbon atoms (e.g. ethylene oxide, propylene oxide, and butylene oxide), and the alkylene oxide addition product may be either a random addition product or a block addition product. Examples of the products obtained by the ring-opening polymerization of alkylene oxides include polytetramethylene ether glycol. In addition, examples of the aforementioned polyester polyols include: hydroxyl-group-terminated polyester polyols obtained from polycarboxylic acids (e.g. aliphatic polycarboxylic acids, such as adipic acid, succinic acid, sebacic acid, azelaic acid, fumaric acid, maleic acid, and linoleic acid dimers; and aromatic polycarboxylic acid, such as phthalic acid, isophthalic acid, and terephthalic acid) and the aforementioned low-molecular polyols or polyether polyols (e.g. triethylene glycol and polyethylene glycol); lactone polyesters such as polycaprolactonediols; and polycarbonatediols. In addition, examples of the aforementioned polymer polyols include polyols obtained by polymerizing vinyl monomers such as acrylonitrile and styrene in the polyols (e.g. the aforementioned polyether polyols and polyester polyols).

Examples of the hydoxycarboxylic acid as the aforementioned active-hydrogen-containing compound include the compounds aforementioned as examples of the aforementioned low-molecular polyols.

Examples of the polyamine as the aforementioned active-hydrogen-containing compound include: aliphatic polyamines, such as ethylenediamine, tetramethylenediamine, hexamethylenediamine, and diethylenetriamine; alicyclic polyamines, such as 4,4'-diaminodicyclohexylmethane (hydrogenated MBA), 1,4-diaminocyclohexane, 4,4'-diaminomethyldicyclohexylmethane, and isophoronediamine; aromatic-ring-containing aliphatic diamines, such as xylylenediamine and tetramethylxylylenediamine; aromatic polyamines, such as diphenylmethanediamine, dichlorodiphenylmethanediamine, tolylenediamine, diethyltolylenediamine, benzidine, and phenylenediamine; alkanolamines, such as mono- or diethanolamine, propanolamine, and N-hydroxyethylethylenediamine; polyalkylene oxide polyamines, such as compounds as obtained by displacing a terminal OH group of the polyether polyols (aforementioned as examples of the high-molecular polyol) with an amino group (e.g. polyoxyethylene ether diamine and polyoxypropylene ether diamine); and mixtures including at least two of these amines. Of these polyamines, the hexamethylenediamine, the isophoronediamine, and the 4,4'-diaminodicyclohexylmethane are particularly favorable.

4

Specific examples of the aforementioned organic polyisocyanate include: aliphatic polyisocyanates having 2 to 12 carbon atoms (which exclude the carbon of the isocyanate (NCO) group), such as ethylene diisocyanate, tetramethylene diisocyanate, hexamethylene diisocyanate (HDI), dodecamethylene diisocyanate, 1,6,11-undecane triisocyanate, 2,2,4-trimethylhexane diisocyanate, lysine diisocyanate, 2,6-diisocyanatomethylcaproate, bis(2-isocyanatoethyl) fumarate, bis(2-isocyanatoethyl) carbonate, and 2-isocyanatoethyl 2,6-diisocyanatohexanoate; alicyclic polyisocyanates having 4 to 15 carbon atoms (which exclude the carbon of the isocyanate (NCO) group), such as isophorone diisocyanate (IPDI), dicyclohexylmethane diisocyanate (hydrogenated MDI), cyclohexylene diisocyanate, methylhexylene diisocyanate (hydrogenated TDI), and bis(2-isocyanatoethyl) 4-cyclohexene-1,2-dicarboxylate; aromatic aliphatic polyisocyanates having 8 to 12 carbon atoms (which exclude the carbon of the isocyanate (NCO) group), such as xylylene diisocyanate, tetramethylxylylene diisocyanate, and diethylbenzene diisocyanate; water-modified products from the HDI, and trimers of the IPDI or HDI; aromatic polyisocyanates having 6 to 20 carbon atoms (which exclude the carbon of the isocyanate (NCO) group), such as tolylene diisocyanate (TDI), crude TDI, diphenylmethane diisocyanate (MDI), polyphenylmethane polyisocyanate (PAPI, namely, crude MDI), and naphthalene diisocyanate; and modified products from the aforementioned polyisocyanates (e.g. modified products containing at least one member selected from the group consisting of a carbodiimide group, a urethodione group, a urethoimine group, a biuret group, and an isocyanurate group). Of these polyisocyanates, the HDI, the IPDI, the hydrogenated MDI, and the tetramethylxylylene diisocyanate are particularly favorable.

The form of the urethane resin and/or the resin as obtained by polymerizing the monomer component including the $\alpha,\beta$-unsaturated carboxylic acid as an essential component in the present invention resin composition may be water-soluble or water-dispersible in the form of colloidal dispersion or emulsion. In addition, it is permitted to jointly use the water-soluble resin and the water-dispersible resin.

The glass transition temperature (Tg) of the urethane resin and/or the resin as obtained by polymerizing the monomer component including the $\beta$-unsaturated carboxylic acid as an essential component in the present invention resin composition is favorably in the range of -50 to 130 ˚C, more favorably -10 to 100 ˚C. In the case where the glass transition temperature (Tg) is lower than -50 ˚C, there is a tendency such that the matrix is so excessively softened as to lower the resistance of the resin composition layer as formed. On the other hand, in the case where this temperature is higher than 130 ˚C, there is a tendency such that: the matrix is so excessively hardened that the resin composition layer as formed is brittle.

The acid value (theoretical acid value) of the urethane resin and/or the resin as obtained by polymerizing the monomer component including the $\alpha,\beta$-unsaturated carboxylic acid as an essential component in the present invention resin composition is favorably in the range of 1 to 800 mgKOH/g-solid, more favorably 2 to 500 mgKOH/g-solid, still more favorably 3 to 300 mgKOH/g-solid, particularly favorably 3 to 240 mgKOH/g-solid. In the case where the acid value (theoretical acid value) is less than 1 mgKOH/g-solid, there is a tendency such that: the matrix is so insufficiently formed that the resistance of the resin composition layer as formed is easily lowered. On the other hand, in the case where the acid value (theoretical acid value) is more than 800 mgKOH/g-solid, there is a tendency such that: particularly the water resistance is lowered.

The weight-average molecular weight of the urethane resin and/or the resin as obtained by polymerizing the monomer component including the $\beta$-unsaturated carboxylic acid as an essential component in the present invention resin composition is favorably not smaller than 1,000, more favorably not smaller than 3,000, still more favorably not smaller than 5,000. In the case where the weight-average molecular weight is smaller than 1,000, there is a tendency such that the increase of the molecular weight during the formation of the matrix is so insufficient as to lower the resistance of the resin composition layer as formed.

Although there is no especial limitation on the solid content of the urethane resin and/or the resin as obtained by polymerizing the monomer component including the $\alpha,\beta$-unsaturated carboxylic acid as an essential component in the present invention resin composition, yet this solid content is favorably in the range of 1 to 70 weight %, more favorably 5 to 60 weight %, still more favorably 10 to 50 weight %. In the case where the solid content is less than 1 weight %, there are disadvantages in that: the resin composition layer is not sufficiently formed and therefore the resistance is lowered. In addition, in the case where the solid content is more than 70 weight %, there is an unfavorable possibility that the handling is difficult due to such as the rise of viscosity.

Although there is no especial limitation on the pH of the urethane resin and/or the resin as obtained by polymerizing the monomer component including the $\alpha,\beta$-unsaturated carboxylic acid as an essential component in the present invention resin composition, yet this pH is favorably in the range of 7 to 11.

When the occasion demands, the present invention resin composition may further comprise another resin in such a range as does not damage the effects of the present invention. Although there is no especial limitation on this other resin, yet the resin composition favorably further comprises a cationic resin essentially as such, because: when the composition further comprises the cationic resin, the adhesion of the formed resin composition layer to the substrate and the solvent resistance are improved.

There is no especial limitation on the cationic resin as used in the present invention if the cationic resin is a resin containing a cationic functional group. Examples thereof include basic nitrogen-containing resins having an amino group as the cationic functional group (e.g. polyalkylenimines, polyamidoamines, aminosulfopolyesters, polyallylamines, polyvinylamines, and their modified polymers). These may be used either alone respectively or in combinations with each other. Incidentally, there is no especial limitation on the form of the cationic resin when being used. However, the cationic resin is favorably used in the form of aqueous solution.

The aforementioned polyalkylenimines can generally be produced by such as: a process that involves ionically polymerizing an alkylenimine (e.g. ethylenimine, 1,2-propylenimine, 1,2-dodecylenimine, 1,1-dimethylethylenimine, phenylethylenimine, benzylethylenimine, hydroxyethylethylenimine, aminoethylethylenimine, 2-methylpropylenimine, 3-chloropropylethylenimine, methoxyethylethylenimine, dodecylaziridinyl formate, N-ethylethylenimine, N-(2-aminoethyl) ethylenimine, N-phenethylethylenimine, N-(2-hydroxyethyl)ethylenimine, N-(cyanoethyl)ethylenimine, and N-(p-chlorophenyl)ethylenimine); or a process that involves polymerizing an alkyloxazoline and thereafter partially or perfectly hydrolyzing the resultant polymer. However, there is no especial limitation thereto.

The aforementioned polyvinylamines, for example, can be obtained by such as: a process that involves polymerizing N-vinylformamide to produce poly(N-vinylformamide) and then partially or perfectly hydrolyzing this poly(N-vinylformamide) with an acid (e.g. hydrochloric acid) or a basic substance; or a process that involves reducing polynitroethylene or its derivatives; or a process that involves Hofmann degradation of polyacrylamide; or a process that involves alkali reduction of N-vinylphthalimide resins. However, there is no especial limitation thereto. Examples of the polyvinylamines include polyvinylamine, polymetavinylamine, polyvinylamine hydrochloride, polyvinylethylamine hydrochloride, polymetavinylmethylamine hydrochloride, and polyvinyl-N-trimethylammonium bromide.

The aforementioned polyallylamines can generally be obtained by polymerizing a hydrochloride of an allylamine monomer and thereafter removing hydrochloric acid. However, there is no especial limitation thereto. Examples of the polyallylamines include polyallylamine, polyallylamine hydrochloride, polyallylethylamine hydrochloride, polyallyldimethylethylammonium hydrochloride, poly(diallylamine hydrochloride), poly(diallylmethylamine hydrochloride), poly(diallyldimethylammonium hydrochloride), their sulfur-dioxide copolymers, acrylamide copolymers, copolymers of diallylamine hydrochloride derivatives, and dimethylaminoethyl (meth)acrylate copolymers.

Examples of the aforementioned polyamidoamines generally include: polycondensation products as obtained by such as polycondensation, interfacial polycondensation, low-temperature-solution polycondensation, poly(phosphoric acid)-solution polycondensation, and solid-phase polycondensation, which involve heating a polyalkylenepolyamine (e.g. hexamethylenediamine, 1,4-phenylenediamine, 1,3-phenylenediamine, diethylenetriamine, triethylenetetramine, tetraethylenepentamine, dipropylenepentamine, dipropylenetriamine, tripropylenetetramine, and dihexamethylenetriamine) and a dicarboxylic acid (e.g. adipic acid, isophthalic acid, terephthalic acid, succinic acid, maleic acid, glutaric acid, suberic acid, and sebacic acid) or its derivative (e.g. acid chloride), and distilling off formed water under reduced pressure; polyaddition products as obtained from a diisocyanate and a dicarboxylic acid; and ring-opening polymerization products as obtained from a lactam. However, there is no especial limitation thereto.

The aforementioned aminosulfopolyesters are, for example, obtained by: heating a polyalkanolamine (e.g. diethanolamine, N-methyldiethanolamine, and triethanolamine), a diol (e.g. diethylene glycol, triethylene glycol, and 1,4-cyclohexanedimethanol), a dicarboxylic acid (e.g. adipic acid, isophthalic acid, terephthalic acid, succinic acid, maleic acid, glutaric acid, suberic acid, and sebacic acid), and 5-sodiosulfoisophthalic acid; and then distilling off formed water under reduced pressure to thereby carry out dehydration condensation. However, there is no especial limitation thereto.

The cationic resin as used in the present invention may be a resin as obtained by mutually crosslinking at least two of the aforementioned cationic resins with a crosslinking agent. Examples thereof include resins as obtained by mutually crosslinking the polyalkylenimine and the polyamide with such as epichlorohydrin. However, there is no especial limitation thereto. In addition, the cationic resin as used in the present invention may be a modified polymer. Examples thereof include ethylene-oxide-modified, propylene-oxide-modified, styrene-oxide-modified, and $\alpha,\beta$-unsaturated-ester-modified ones of 0 to 100 % in modification ratio.

The number-average molecular weight of the aforementioned cationic resin is favorably in the range of 600 to 5,000,000, more favorably 600 to 2,700,000, still more favorably 600 to 1,000,000, particularly favorably 1,000 to 300,000, most favorably 1,200 to 250,000. In the case where the cationic resin has a number-average molecular weight of smaller than 600, there is a tendency such that the increase of the molecular weight during the formation of the matrix is so insufficient as to lower the resistance of the resin composition layer as formed. On the other hand, in the case where the cationic resin has a number-average molecular weight of larger than 5,000,000, the reaction during the formation of the matrix is so insufficient as to result in lowering the water resistance of the resin composition layer as formed.

In the case where the present invention resin composition contains the aforementioned cationic resin, there is no especial limitation on its mixing amount. However, it is favorably not more than 10 weight % in terms of solid content relative to the total (solid content) of the aforementioned urethane resin and/or the aforementioned resin as obtained by polymerizing the monomer component including the $\alpha,\beta$-unsaturated carboxylic acid as an essential component. In the case where the solid content of the cationic resin is more than 10 weight %, there is a tendency such that the resistance of the resin composition layer as formed is lowered.

The present invention resin composition can further use a synthetic or natural resin as another resin besides the aforementioned cationic resin. Examples thereof include: synthetic resins (e.g. polyolefinic and dienic resins, such as polyethylene, ethylene-vinyl acetate copolymers, ethylene-(meth)acrylate ester copolymers, polypropylene, and propylene-butene copolymers; polystyrenic resins, such as polystyrene and styrene-butadiene copolymers; polyvinyl acetate resins; (meth)acrylate ester resins; acrylonitrile resins; polyether resins, such as polyoxymethylene and polyphenylene ether resins; polycarbonate resins; polyester resins; unsaturated polyester resins; epoxy resins; and polyimide resins); and natural resins such as casein. In addition, these may be used either alone respectively or in combinations with each other.

The present invention resin composition favorably further comprises an aqueous medium. Although there is no especial limitation on the aqueous medium, the most favorable is water alone as the solvent. Also usable are one or at least two of low-boiling-point water-soluble organic solvents (e.g. methanol and ethanol), or solvents as obtained by mixing them with water.

As to the present invention resin composition, its total solid content is favorably not less than 1 weight %. In the case where the total solid content is less than 1 weight % of the resin composition, there is a tendency such that the driability is insufficient. Therefore, the mixing amount of the aforementioned aqueous medium is favorably adjusted in such a manner that the total solid content will not be less than 1 weight % of the resin composition.

The present invention resin composition further comprises the multivalent metal compound, too, as an essential component.

As the multivalent metal compound as contained in the present invention resin composition ammonium zirconium carbonate is used.

The mixing ratio of the multivalent metal compound in the present invention resin composition is in the range of 0.1 to 50.0 weight %, favorably 0.2 to 40 weight %. In the case where the mixing ratio of the multivalent metal compound is less than 0.1 weight %, there are disadvantages in that the crosslinking density of the matrix is so insufficient as to lower such as the water resistance of the resin composition layer as formed. In addition, in the case where the mixing ratio of the multivalent metal compound is more than 50.0 weight %, there are disadvantages in that the crosslinking density of the matrix tends to be so excessive as to result in formation of a brittle resin composition layer.

Particularly, as the case where the multivalent metal compound is the ammonium zirconium carbonate, its mixing ratio is in the range of 0.1 to 50.0 weight %, favorably 0.2 to 40.0 weight %, more favorably 0.5 to 35.0 weight %, particularly favorably 0.5 to 15.0 weight %, as a solid content when the entire ammonium zirconium carbonate is taken in terms of zirconium dioxide. In the case where the aforementioned solid content in terms of zirconium dioxide is less than 0.1 weight %, there are disadvantages in that the crosslinking density of the matrix is so insufficient as to lower such as the water resistance of the resin composition layer as formed. In addition, in the case where the aforementioned solid content in terms of zirconium dioxide is more than 50.0 weight %, there are disadvantages in that the crosslinking density of the matrix tends to be so excessive as to result in formation of a brittle resin composition layer.

The aforementioned ammonium zirconium carbonate may be mixed in the form of aqueous solution. In this case, the content of the ammonium zirconium carbonate in its aqueous solution is favorably in the range of 10.0 to 25.0 weight %, more favorably 13.0 to 24.0 weight %, still more favorably 18.0 to 22.0 weight %, as a solid content when the entire ammonium zirconium carbonate is taken in terms of zirconium dioxide. In the case where the aforementioned solid content in terms of zirconium dioxide is less than 10.0 weight %, there are disadvantages in that the dilution degree is so high as to lower the stability of the aqueous ammonium zirconium carbonate solution. In addition, in the case where the aforementioned solid content in terms of zirconium dioxide is more than 25.0 weight %, there are disadvantages in that solid precipitates easily form.

The present invention resin composition is characterized by further comprising the tartaric acid and/or its salt. The coexistence of the tartaric acid and/or its salt makes the present invention resin composition excellent in the one-liquid stability and also in the coating-film appearance, coating-film adhesion, water-rubbing resistance, warm-water-whitening resistance, and blocking resistance.

The mixing ratio of the tartaric acid and/or its salt in the present invention resin composition is in the range of 13.7 to 54.1 weight %, favorably 20.4 to 47.3 weight %, relative to the weight of the metal atom in the multivalent metal compound. In the case where the aforementioned mixing ratio is less than 4.0 weight %, there are disadvantages in that: there may occur defects in the behavior and state (e.g. particle diameter and viscosity of the resin composition when the tartaric acid and/or its salt is mixed with the resin) and in properties such as appearance, and therefore the one-liquid stability is greatly damaged. In addition, in the case where the aforementioned mixing ratio is more than 68.0 weight %, there are disadvantages in that the performance such as the water resistance of the resin composition is deteriorated. As the multivalent metal compound is ammonium zirconium carbonate, the mixing ratio of the tartaric acid and/or its salt in the present invention resin composition is favorably in the range of 10.1 to 40.0 weight %, particularly favorably 15.1 to 35.0 weight %, relative to the solid content of the ammonium zirconium carbonate when its entirety is taken in terms of zirconium dioxide. In the case where the aforementioned mixing ratio is less than 3.0 weight %, there are disadvantages in that: there may occur defects in the behavior and state (e.g. particle diameter and viscosity of the resin composition when the tartaric acid and/or its salt is mixed with the resin) and in properties such as appearance, and therefore the one-liquid stability is greatly damaged. In addition, in the case where the aforementioned mixing ratio is more than 50.0 weight %, there are disadvantages in that the performance such as the water resistance of the resin composition is deteriorated.

The present invention resin composition may further comprise various additives when the occasion demands. Examples of the additives include: various organic or inorganic pigments; various dyes (e.g. acid dyes, direct dyes, reactive dyes, dispersive dyes, and food colors); plasticizers, film-forming assistants, wax, moisture-retaining agents, defoamers, surfactants, wetting agents, leveling agents, thickeners, rheology modifiers, metal-ion-blocking agents, biocides, dispersants; extenders (e.g. calcium carbonate, talc, clay, silica, and silicate); fillers, freezing inhibitors, freezing-and-defrosting stabilizers, preservatives, antiseptics, improvers for color water-retainability, antistatic agents, antioxidants, ultraviolet inhibitors, and fluorescent brightening agents. The mixing amount of these additives may fitly be set in such a range as does not damage the effects of the present invention.

The present invention resin composition can be obtained by mixing together the following: the urethane resin and/or the resin as obtained by polymerizing the monomer component including the $\alpha,\beta$-unsaturated carboxylic acid as an essential component; and the multivalent metal compound; and the tartaric acid and/or its salt; as essential components. There is no especial limitation on its production process. More particularly, the aforementioned essential components and other components (used if necessary) may be mixed together in any order and by any method. Specifically, the present invention resin composition can be produced with publicly known stirring, dispersing, and crushing apparatuses (e.g. stirring machines equipped with such as paddle blades, high-speed-stirring dispersing machines, high-pressure homogenizers, ball mills, sand mills, Attritor, basket mills, roll mills, and vibratory dispersing machines). In addition, when the occasion demands, there can also be removed such as coarse particles by passing the composition though such as strainers.

There is no especial limitation on the substrate that can be coated or impregnated with the present invention resin composition. Examples thereof include: organic substrates (e.g. olefinic resins, such as polyethylene and polypropylene; polystyrenic resins, nylon, polyester resins such as PET, cellophane, vinyl chloride resins, and vinylidene chloride resins); paper substrates (e.g. high-quality papers, craft papers, crape papers, glassine papers, and plastic-coated papers); inorganic substrates (e.g. metals such as iron, aluminum, and copper; glass, concrete, cement, brick, and plaster plates); bitumen; cinder blocks; particle boards; woods; cellulosic fibers (e.g. linen, cotton, rayon, and cupra); protein fibers (e.g. wool, beast hairs, and silk); semi-synthetic fibers (e.g. acetates); synthetic fibers (e.g. nylon, polyesters, polyacrylonitriles, and vinylon); inorganic fibers (e.g. rock wool and glass fibers); and leathers. In addition, the resin composition can be coated onto a substrate as covered with paints (e.g. primer coatings). Although there is no especial limitation on the form of these substrates, examples thereof include films, sheets, molded products, foamed structures, cords, and manufactured textile goods (e.g. nonwoven fabrics and cloths). In addition, there is no especial limitation on the method for coating or impregnating the present invention resin composition, either. For example, there can be adopted publicly known methods and apparatuses for such as knife coating, comma coating, slot die coating, slide-die coating, air-knife coating, blade coating, bar coating, kiss coating, spray coating, air-spray coating, roll coating, brush coating, curtain coating, flood coating, and dipping coating.

Because of the coexistence of the tartaric acid and/or its salt, the present invention resin composition is excellent in the one-liquid stability and also displays good driability even under mild drying conditions (i.e. room temperature), and further the resultant coating film is excellent particularly in the coating-film appearance, coating-film adhesion, water-rubbing resistance, warm-water-whitening resistance, and blocking resistance, and is excellent also in the water resistance, solvent resistance, and strength. Therefore, the present invention resin composition displays the practical resistances (e.g. friction resistance, blocking resistance, washing resistance, water-resistant strength, water-resistant adhesion, and chemical resistance) and good workability and can favorably be used, in wide uses for such as: various inks (e.g. gravure-printing inks, flexographic-printing inks, and inks for ink jet printers); various clear coating agents (e.g. OP vanish and film coatings); receptor layers of receiving papers for ink jet printers; various paints (e.g. paints for road sings, conductive paints, paints for plastics, paints for inorganic building materials; paints for metals, paints for leathers, and mending paints); primers for organic substrates, inorganic substrates, and substrates difficult to adhere to; various fiber-treating agents (e.g. binders for nonwoven fabrics, binders for pigment printing, binders for water-repelling or finishing processing, and binders for woven fabric coating or impregnation treatment processing; various adhesives (e.g. adhesives for various laminates such as dry laminates and extruded laminates, adhesives for woods, and adhesives for structures); antistatic agents; primers; top coatings; pressure sensitive adhesives; and various cosmetics (e.g. manicures and hair-setting agents).

In addition, the coating film as obtained from an acrylic emulsion composition is a coating film that is very excellent in the blocking resistance without deteriorating the warm-water-whitening resistance and is excellent also in the weather resistance and the frost damage resistance, wherein the acrylic emulsion composition includes: an acrylic emulsion as obtained by emulsion polymerization of the monomer component including the $\alpha,\beta$-unsaturated carboxylic acid as an essential component; the multivalent metal compound; and the tartaric acid and/or its salt. Favorable particularly for the weather resistance is a composition including an acrylic emulsion as obtained by emulsion polymerization of a monomer component including a cycloalkyl-group-containing polymerizable unsaturated monomer as an essential component, and more favorable is a composition including an acrylic emulsion as obtained by emulsion polymerization of a monomer component including an ultraviolet-absorbing-group-containing polymerizable unsaturated monomer and/or an ultraviolet-stabilizing-group-containing polymerizable unsaturated monomer as an essential component.

In the case of using the cycloalkyl-group-containing polymerizable unsaturated monomer, its amount is favorably in the range of 5 to 99.5 weight % relative to the entire monomer components. In the case where the amount of the cycloalkyl-group-containing polymerizable unsaturated monomer is smaller than 5 weight % relative to the entire monomer components, there is a possibility that: the weather resistance may not be improved sufficiently, and in addition, when a composition including the resultant acrylic emulsion is used for a paint, the appearance and massive feeling of the resultant dry coating film may be deteriorated. On the other hand, in the case where the above amount is larger than 99.5 weight %, there is a possibility that: the polymerization stability may be so much deteriorated as to lower the long-term storage stability of the composition including the resultant acrylic emulsion.

In the case of using the ultraviolet-absorbing-group-containing polymerizable unsaturated monomer, its amount is favorably in the range of 0.1 to 10 weight % relative to the entire monomer components. In the case where the amount of the ultraviolet-absorbing-group-containing polymerizable unsaturated monomer is smaller than 0.1 weight % relative to the entire monomer components, there is a possibility that the weather resistance may not be improved sufficiently. On the other hand, in the case where the above amount is larger than 10 weight %, there are disadvantages in that the polymerization stability is easily lowered.

In the case of using the ultraviolet-stabilizing-group-containing polymerizable unsaturated monomer, its amount is favorably in the range of 0.1 to 10 weight % relative to the entire monomer components. In the case where the amount of the ultraviolet-stabilizing-group-containing polymerizable unsaturated monomer is smaller than 0.1 weight % relative to the entire monomer components, there is a possibility that the weather resistance may not be improved sufficiently. On the other hand, in the case where the above amount is larger than 10 weight %, there are disadvantages in that the polymerization stability is easily lowered.

The acrylic emulsion composition, including: the acrylic emulsion as obtained by emulsion polymerization of the monomer component including the β-unsaturated carboxylic acid as an essential component; the multivalent metal compound; and the tartaric acid and/or its salt; is very useful particularly in the case of using the composition as such as: a top coating for factory-coating paints; a intermediate-coating paint; and a sealer.

(Effects and Advantages of the Invention):

The present invention can provide the resin composition comprising: the urethane resin and/or the resin as obtained by polymerizing the monomer component including the $\alpha,\beta$-unsaturated carboxylic acid as an essential component; and the multivalent metal compound; which resin composition is excellent in the one-liquid stability and also in the coating-film appearance, coating-film adhesion, water-rubbing resistance, warm-water-whitening resistance, and blocking resistance.

## DETAILED DESCRIPTION OF THE PREFERRED EMBODIMENTS

Hereinafter, the present invention is more specifically illustrated by the following examples of some preferred embodiments in comparison with comparative examples not according to the invention. However, the invention is not limited to these examples. Incidentally, unless otherwise noted, the units "part(s)" and "%" as mentioned in the examples and the comparative examples denote "weight part(s)" and "weight %" respectively.

(Theoretical acid value):

The theoretical acid value is represented by the mg of potassium hydroxide which is required for neutralizing a free acid as contained in 1 g of resin.

(Calculated Tg):

The calculated Tg (K) is determined in accordance with the following equation:

$$(1/Tg) = (W_1/Tg_1) + (W_2/Tg_2) + \cdots + (W_i/Tg_i) + \cdots + (W_n/Tg_n)$$

wherein: as to a polymer including n kinds of monomers, the glass transition temperature of a homopolymer of each of the monomers composing this polymer is represented by $Tg_i$ (K), and the weight ratio of each of the monomers is represented by $W_i$,

wherein:

$$\sum_{i=1}^{n} W_i = 1$$

(Solid content):

About 1 g of sample was accurately measured on an aluminum foil dish and then dried in an oven of $105 \pm 5$ °C for $60 \pm 5$ minutes, and then the solid content (%) was calculated from the weight W0 (g) of the sample before the drying and the weight W1 (g) of the sample after the drying in accordance with the following equation.

$$N = (W1/W0) \times 100$$

where: N: solid content (%)
W0: weight (g) of sample before drying
W1: weight (g) of sample after drying.

(Example 1):

An amount of 500.00 parts of a water-dispersible styrene-acrylic resin A (product name: Joncryl 775 (produced by Johnson Polymer Corporation), theoretical acid value: 55 mgKOH/g-solid, calculated Tg: 37 °C, and solid content: 46 %), 50.00 parts of ammonium zirconium carbonate (solid content: 20 % in terms of zirconium dioxide (produced by Magnesium Electron Ltd.)), and 1.52 parts of tartaric acid were weighed out into a dispersing machine and then stirred in this dispersing machine at 2,000 r.p.m. for 5 minutes, thus obtaining an aqueous resin composition.
Various evaluations were carried out in accordance with the following methods by using the aqueous resin composition as obtained. The results are listed in Table 1.

(Coating-film appearance: just after preparation of solution):

The aqueous resin composition as obtained was coated onto a corona-discharge-treated OPP film using a bar coater in such a manner that the film thickness would be about 1 $\mu$m as a solid content, and thereafter the resultant coating film was aged at 30 °C, 60 % RH for 24 hours, thus obtaining a test film. Then, the coating-film appearance of this teat film was observed with the eye. The evaluation was made on the following standard.
○: There were no appearance defects. ✕: There were appearance defects.

(Coating-film appearance: after preservation at 40 °C for 1 week):

The aqueous resin composition as obtained was preserved under conditions of 40 °C for 1 week, and thereafter coated onto a corona-discharge-treated OPP film using a bar coater in such a manner that the film thickness would be about 1 $\mu$m as a solid content. Thereafter, the resultant coating film was aged at 30 °C, 60 % RH for 24 hours, thus obtaining a test film. Then, the coating-film appearance of this teat film was observed with the eye. The evaluation was made on the following standard.
○: There were no appearance defects. ✕ : There were appearance defects.

(Solution viscosity: just after preparation of solution):

As to the aqueous resin composition as obtained, its solution viscosity was measured with a single-cylinder type rotating viscometer, Vismetron VG-A1 (produced by Shibaura System), under conditions of Rotor No. 2 and a revolution rate of 60 RPM.

(Solution viscosity: after preservation at 40 ˚C for 1 week):

The aqueous resin composition as obtained was preserved under conditions of 40 ˚C for 1 week, and thereafter its solution viscosity was measured with a single-cylinder type rotating viscometer, Vismetron VG-A1 (produced by Shibaura System), under conditions of Rotor No. 2 and a revolution rate of 60 RPM.

(Particle diameter: just after preparation of solution):

As to the aqueous resin composition as obtained, its average particle diameter was measured with a laser-diffraction/scattering type particle-diameter-distribution measurement apparatus, HORIBA LA-910 (produced by Horiba Seisakusho Co., Ltd.).

(Particle diameter: after preservation at 40 ˚C for 1 week):

The aqueous resin composition as obtained was preserved under conditions of 40 ˚C for 1 week, and thereafter its average particle diameter was measured with a laser-diffraction/scattering type particle-diameter-distribution measurement apparatus, HORIBA LA-910 (produced by Horiba Seisakusho Co., Ltd.).

(Adhesion):

A pressure-sensitive adhesive tape having a width of 12 mm was attached onto the coating-film surface of the test film as obtained when the evaluation of the coating-film appearance (just after preparation of solution) was carried out. Thereafter, the tape was forcedly peeled off to observe with the eye whether the peeling of the coating film from the OPP film was caused or not. The evaluation was made on the following standard.
○: There was no peeling. ×: There was peeling.

(Water-rubbing resistance):

Absorbent cotton wool which had been immersed into water was caused to go back and forth 200 times with a friction colorfastness testing machine (Rubbing Meter FR-2 produced by Suga Testing Machine Co., Ltd.) on the coating film of the test film as obtained when the evaluation of the coating-film appearance (just after preparation of solution) was carried out. Then, there was measured the number of times of the going back and forth as needed for a change of the coating film. The evaluation was made on the following standard.
○: No change until 200 times. Δ: 100 times to 200 times (but excluding 200 times). ×: Less than 100 times.

(Solvent resistance):

Absorbent cotton wool which had been immersed into 80 % ethanol was caused to go back and forth 10 times with a friction colorfastness testing machine (Rubbing Meter FR-2 produced by Suga Testing Machine Co., Ltd.) on the coating film of the test film as obtained when the evaluation of the coating-film appearance (just after preparation of solution) was carried out. Then, there was observed a change of the coating film with the eye. The evaluation was made on the following standard.
O: No change. Δ: Whitening. ×: Peeling.

(Example 2):

Various tests were carried out in the same way as of Example 1 except that the mixed components as used in Example 1 were used in their respective mixing ratios listed in Table 1. The results are listed in Table 1.

(Example 3):

Various tests were carried out in the same way as of Example 1 except to substitute a water-dispersible styrene-acrylic resin B (product name: Joncryl 7001 (produced by Johnson Polymer Corporation), theoretical acid value: 87 mgKOH/g-solid, calculated Tg: 12 ˚C, and solid content: 42 %) in the mixing ratio as listed in Table 1. The results are listed in Table 1.

(Example 4):

Various tests were carried out in the same way as of Example 3 except that the mixed components as used in Example 3 were used in their respective mixing ratios listed in Table 1. The results are listed in Table 1.

(Example 5):

Various tests were carried out in the same way as of Example 1 except to substitute a water-dispersible urethane resin (Superflex 460 (produced by Dai-ichi Kogyo Seiyaku Co., Ltd.)) in the mixing ratio as listed in Table 1. The results are listed in Table 1.

(Comparative Examples 1 to 3):

Various tests were carried out in the same way as of Example 1 except that components selected from among the mixed components as used in Examples 1 to 5 were used in the mixing ratios as listed in Table 2. The results are listed in Table 2.

(Example 6):

Various tests were carried out in the same way as of Example 1 except to substitute the water-dispersible styrene-acrylic resin B, a water-soluble styrene-acrylic resin (product name: Joncryl 61J (produced by Johnson Polymer Corporation), theoretical acid value: 195 mgKOH/g-solid, calculated Tg: 70 °C, and solid content: 30.5 %), and propylene-oxide-modified polyethylenimine (product name: Epomin PP-061 (produced by Nippon Shokubai Co., Ltd.), and solid content: 50 %) as the cationic resin in the mixing ratios as listed in Table 1. The results are listed in Table 1.

(Comparative Example 4):

Various tests were carried out in the same way as of Example 6 except that the tartaric acid was not used. The results are listed in Table 2.

**Table 1**

|  |  | Example 1 | Example 2 | Example 3 | Example 4 | Example 5 | Example 6 |
|---|---|---|---|---|---|---|---|
| Composition (weight parts) | Water-dispersible styrene-acrylic resin A | 500.00 | 500.00 | - | - | - | - |
|  | Water-dispersible styrene-acrylic resin B | - | - | 500.00 | 500.00 | - | 370.00 |
|  | Water-soluble styrene-acrylic resin | - | - | - | - | - | 59.00 |
|  | Water-dispersible urethane resin | - | - | - | - | 500.00 | - |
|  | Cationic resin | - | - | - | - | - | 9.00 |
|  | Ammonium zirconium carbonate ($ZrO_2$ 20 %) | 50.00 | 50.00 | 50.00 | 50.00 | 50.00 | 77.00 |
|  | Tartaric acid | 1.52 | 3.14 | 1.52 | 3.14 | 1.52 | 2.34 |

(continued)

|  | Example 1 | Example 2 | Example 3 | Example 4 | Example 5 | Example 6 |
|---|---|---|---|---|---|---|
| Coating-film appearance (just after preparation of solution) | ○ | ○ | ○ | ○ | ○ | ○ |
| Coating-film appearance (after preservation at 40 ˚C for 1 week) | ○ | ○ | ○ | ○ | ○ | ○ |
| Solution viscosity (mPa·s) (just after preparation of solution) | 320 | 343 | 343 | 378 | 130 | 430 |
| Solution viscosity (mPa·s) (after preservation at 40 ˚C for 1 week) | 290 | 315 | 335 | 340 | 118 | 420 |
| Particle diameter (average particle diameter $\mu$m) (just after preparation of solution) | 0.08 | 0.08 | 0.08 | 0.08 | 0.08 | 0.08 |
| Particle diameter (average particle diameter: $\mu$m) (after preservation at 40 ˚C for 1 week) | 0.08 | 0.08 | 0.08 | 0.08 | 0.09 | 0.08 |
| Adhesion | ○ | ○ | ○ | ○ | ○ | ○ |
| Water-rubbing resistance | ○ | ○ | ○ | ○ | ○ | ○ |

Table 2

| | | Comparative Example 1 | Comparative Example 2 | Comparative Example 3 | Comparative Example 4 |
|---|---|---|---|---|---|
| Composition (weight parts) | Water-dispersible styrene-acrylic resin A | 500.00 | - | - | - |
| | Water-dispersible styrene-acrylic resin B | - | 500.00 | - | 370.00 |
| | Water-soluble styrene-acrylic resin | - | - | - | 59.00 |
| | water-dispersible urethane resin | - | - | 500.00 | - |
| | Cationic resin | - | - | - | 9.00 |
| | Ammonium zirconium carbonate (ZrO$_2$ 20 %) | 50.00 | 50.00 | 50.00 | 77.00 |
| | Tartaric acid | - | - | - | - |
| Coating-film appearance (just after preparation of solution) | | ○ | ○ | ○ | ○ |
| Coating-film appearance (after preservation at 40 ˚C for 1 week) | | - | - | - | × |

(continued)

| | Comparative Example 1 | Comparative Example 2 | Comparative Example 3 | Comparative Example 4 |
|---|---|---|---|---|
| Solution viscosity (mPa·s) (just after preparation of solution) | 340 | 355 | 18 | 430 |
| Solution viscosity (mPa·s) (after preservation at 40 ˚C for I week) | Solidified | Solidified | Solidified | 645 |
| Particle diameter (average particle diameter: μm) (just after preparation of solution) | 0.08 | 0.08 | 550.05 | 0.08 |
| Particle diameter (average particle diameter: μm) (after preservation at 40 ˚C for I week) | Solidified | Solidified | Solidified | 28.4 |
| Adhesion | ○ | ○ | ○ | ○ |
| Water-rubbing resistance | ○ | ○ | ○ | ○ |
| Solvent resistance | Δ | Δ | Δ | ○ |

(Production Example 1):

A flask, as equipped with a dropping funnel, a stirrer, a nitrogen-introducing tube, a thermometer, and a reflux condenser, was charged with 963.0 parts of pure water, and the pure water was heated to 75 ˚C under stirred conditions while nitrogen gas was slowly blown thereinto. On the other hand, 80.0 parts of 25 % aqueous solution of Aqualon BC-10 (anionic reactive emulsifier produced by Dai-ichi Kogyo Seiyaku Co., Ltd.), 40.0 parts of 25 % aqueous solution of Aqualon RN-20 (nonionic reactive emulsifier produced by Dai-ichi Kogyo Seiyaku Co., Ltd.), and 230 parts of water were added to a monomers-mixed solution including 445.7 parts of methyl methacrylate (which may hereinafter be abbreviated to MMA), 444.3 parts of 2-ethylhexyl acrylate (which may hereinafter be abbreviated to 2EHA), 100.0 parts of styrene (which may hereinafter be abbreviated to St), and 10.0 parts of acrylic acid (which may hereinafter be abbreviated to AA), thus preparing a pre-emulsion mixture. An amount of 10 % of this pre-emulsion mixture was added to the aforementioned flask, and the resultant mixture was maintained at 75 ˚C. Thereafter, polymerization was started by adding thereto 60.0 parts of 5 % aqueous ammonium persulfate solution (which may hereinafter be abbreviated to APS). The temperature in the reaction system was maintained at 80 ˚C for 10 minutes, and thereafter the residual pre-emulsion mixture was uniformly dropwise added thereto over a period of 180 minutes. After the end of this dropwise addition, the dropping tank was washed with 20 parts of pure water, and the resultant washed-off liquid was added to the aforementioned flask. During the dropwise addition, the temperature in the reaction system was maintained at 80 ˚C. Furthermore, after the end of the dropwise addition, the resultant mixture was aged while being stirred at 80 ˚C for 60 minutes, thus finishing the polymerization. Thereafter, the mixture was cooled, and then 9.3 parts of 25 % aqueous ammonia solution was added thereto under conditions where the temperature in the reaction system was not higher than 50 ˚C. After being stirred for not shorter than 10 minutes, the resultant mixture was cooled to room temperature and then filtrated with a wire gauze of 100 meshes, thus obtaining a polymer dispersion. The average particle diameter of the resultant acrylic emulsion (1) was measured with a light-scattering type particle-diameter measurement apparatus, so that it was about 150 nm. In addition, its theoretical acid value, solid content, and calculated Tg were 8 mgKOH/g-solid, 43.0 %, and 0 ˚C, respectively.

(Production Example 2):

A flask, as equipped with a dropping funnel, a stirrer, a nitrogen-introducing tube, a thermometer, and a reflux condenser, was charged with 957.3 parts of pure water, and the pure water was heated to 75 ˚C under stirred conditions while nitrogen gas was slowly blown thereinto. On the other hand, 80.0 parts of 25 % aqueous solution of Aqualon BC-10 (anionic reactive emulsifier produced by Dai-ichi Kogyo Seiyaku Co., Ltd.), 40.0 parts of 25 % aqueous solution of Aqualon RN-20 (nonionic reactive emulsifier produced by Dai-ichi Kogyo Seiyaku Co., Ltd.), and 230 parts of water were added to a monomers-mixed solution including 175.1 parts of MMA, 394.9 parts of 2EHA, 400.0 parts of cyclohexyl methacrylate (which may hereinafter be abbreviated to CHMA), and 30.0 parts of methacrylic acid (which may hereinafter be abbreviated to MAA), thus preparing a pre-emulsion mixture. An amount of 10 % of this pre-emulsion mixture was added to the aforementioned flask, and the resultant mixture was maintained at 75 ˚C. Thereafter, polymerization was started by adding thereto 60.0 parts of APS. The temperature in the reaction system was maintained at 80 ˚C for 10 minutes, and thereafter the residual pre-emulsion mixture was uniformly dropwise added thereto over a period of 180 minutes. After the end of this dropwise addition, the dropping tank was washed with 20 parts of pure water, and the resultant washed-off liquid was added to the aforementioned flask. During the dropwise addition, the temperature in the reaction system was maintained at 80 ˚C. Furthermore, after the end of the dropwise addition, the resultant mixture was aged while being stirred at 80 ˚C for 60 minutes, thus finishing the polymerization. Thereafter, the mixture was cooled, and then 15.0 parts of 25 % aqueous ammonia solution was added thereto under conditions where the temperature in the reaction system was not higher than 50 ˚C. After being stirred for not shorter than 10 minutes, the resultant mixture was cooled to room temperature and then filtrated with a wire gauze of 100 meshes, thus obtaining a polymer dispersion. The average particle diameter of the resultant acrylic emulsion (2) was measured with a light-scattering type particle-diameter measurement apparatus, so that it was about 150 nm. In addition, its theoretical acid value, solid content, and calculated Tg were 20 mgKOH/g-solid, 43.0 %, and 0 ˚C, respectively.

(Production Example 3):

A flask, as equipped with a dropping funnel, a stirrer, a nitrogen-introducing tube, a thermometer, and a reflux condenser, was charged with 943.0 parts of pure water, and the pure water was heated to 75 ˚C under stirred conditions while nitrogen gas was slowly blown thereinto. On the other hand, 40.0 parts of 25 % aqueous solution of Aqualon BC-10 (anionic reactive emulsifier produced by Dai-ichi Kogyo Seiyaku Co., Ltd.), 20.0 parts of 25 % aqueous solution of Aqualon RN-20 (nonionic reactive emulsifier produced by Dai-ichi Kogyo Seiyaku Co., Ltd.), and 115 parts of water were added to a monomers-mixed solution including 77.0 parts of MMA, 188.0 parts of 2EHA, 200.0 parts of CHMA, 25.0 parts of n-butyl methacrylate (which may hereinafter be abbreviated to n-BMA), and 10.0 parts of AA, thus preparing a pre-emulsion mixture 1. An amount of 20 % of this pre-emulsion mixture 1 was added to the aforementioned flask, and the resultant mixture was maintained at 75 ˚C. Thereafter, polymerization was started by adding thereto 60.0 parts of APS. The temperature in the reaction system was maintained at 80 ˚C for 10 minutes, and thereafter the residual pre-emulsion mixture 1 was uniformly dropwise added thereto over a period of 90 minutes. After the end of this dropwise addition, the dropping tank was washed with 20 parts of pure water, and the resultant washed-off liquid was added to the aforementioned flask. During the dropwise addition, the temperature in the reaction system was maintained at 80 ˚C. Furthermore, after the end of the dropwise addition, the resultant mixture was maintained at 80 ˚C for 30 minutes and then neutralized by adding thereto 4.3 parts of 25 % aqueous ammonia solution, thus finishing the first-stage polymerization.

Subsequently, with the reaction system left maintained at 80 ˚C, a pre-emulsion mixture 2 as prepared in the same way as of the pre-emulsion mixture 1 was uniformly dropwise added to the reaction system at 80 ˚C over a period of 90 minutes, wherein the pre-emulsion mixture 2 included 200 parts of CHMA, 77.0 parts of MMA, 188.0 parts of 2EHA, 25 parts of n-BMA, 5.0 parts of Piperidine A (Adekastab LA-87 produced by Asahi Kasei Corporation: 4-methacryloyloxy-2,2,6,6-tetramethylpiperidine), 5.0 parts of Benzotriazole B (RUVA-93 produced by Otsuka Chemical Co., Ltd.: 2-[2'-hydroxy-5'-(methacryloyloxyethyl)phenyl]-2H-benzotriazole), 40.0 parts of 25 % aqueous solution of Aqualon BC-10 (anionic reactive emulsifier produced by Dai-ichi Kogyo Seiyaku Co., Ltd.), 20.0 parts of 25 % aqueous solution of Aqualon RN-20 (nonionic reactive emulsifier produced by Dai-ichi Kogyo Seiyaku Co., Ltd.), and 115 parts of water. After the end of the dropwise addition, the dropping tank was washed with 20 parts of pure water, and the resultant washed-off liquid was added to the aforementioned flask. Furthermore, the resultant mixture was aged at 80 ˚C for 60 minutes to thus finish the second-stage polymerization. Thereafter, the mixture was cooled, and then 5.0 parts of 25 % aqueous ammonia solution was added thereto under conditions where the temperature in the reaction system was not higher than 50 ˚C, After being stirred for not shorter than 10 minutes, the resultant mixture was cooled to room temperature and then filtrated with a wire gauze of 100 meshes, thus obtaining a polymer dispersion. The average particle diameter of the resultant acrylic emulsion (3) was measured with a light-scattering type particle-diameter measurement apparatus, so that it was about 130 nm. In addition, its theoretical acid value, solid content, and calculated Tg were 8 mgKOH/g-solid, 43.0 %, and 0 ˚C, respectively.

(Example 7):

An amount of 500.0 parts of the acrylic emulsion (1) as obtained in Production Example 1, 18.8 parts of ammonium zirconium carbonate (solid content: 20 % in terms of zirconium dioxide), and 0.6 part of tartaric acid were weighed out into a dispersing machine and then stirred in this dispersing machine at 2,000 r.p.m. for 5 minutes, thus obtaining an aqueous resin composition. To this aqueous resin composition as obtained, there was added 10.8 parts of a mixed solution of butyl cellosolve/texanol (trade name: CS-12, produced by Chisso Corporation) = 1/1, and the resultant mixture was stirred in the dispersing machine at 1,000 r.p.m. for 5 minutes, thus obtaining a clear paint composition (1).

Various evaluations were carried out in accordance with the following methods by using the clear paint composition (1) as obtained. The results are listed in Table 3.

(Blocking resistance):

A solvent-type sealer was coated onto a slate plate in such a manner that the amount of the resultant dry coating film per unit area would be 20 g/m$^2$, and then a base coating paint having the below-mentioned composition was further coated thereto using an applicator of 4 mil, and then the resultant coating film was set for 5 minutes and then dried with a hot-air dryer of 100 ˚C for 10 minutes.

<Composition of base coating paint>:

"Acryset EX-35" produced by Nippon Shokubai Co., Ltd.: 300 weight parts
White paste (as prepared by adding 500 weight parts of glass beads into 60 weight parts of dispersant ("Demol EP" produced by Kao Corporation), 50 weight parts of dispersant ("Discoat N-14" produced by Dai-ichi Kogyo Seiyaku Co., Ltd.), 10 weight parts of wetting agent ("Emulgen 909" produced by Kao Corporation), 210 weight parts of deionized water, 60 weight parts of ethylene glycol, 1,000 weight parts of titanium oxide ("CR-95" produced by Ishihara Sangyo Kaisha, Ltd.), and 10 weight parts of defoamer ("Nopco 8034L" produced by San Nopco, Limited), and then stirring them with a homodisper at 3,000 min$^{-1}$ for 60 minutes): 135 weight parts
Black paste ("Unirant 88" produced by Yokohama Kasei): 10 weight parts
Defoamer ("Nopco 8034L" produced by San Nopco, Limited): 1.5 weight parts
Butyl cellosolve: 15 weight parts
Film-forming assistant ("CS-12" produced by Chisso Corporation): 15 weight parts
The clear paint composition to be measured was coated onto the above base coating film using an applicator of 4 mil, and then the resultant coating film was set for 5 minutes and then dried with a hot-air dryer of 100 ˚C for 5 minutes to thus prepare a test plate.
The test plate as obtained was subjected to a print resistance test similar to the print resistance test according to JIS K5400. Its conditions were as follows. Immediately after having been obtained, the test plate was rapidly transferred into a hot-air dryer of 60 ˚C and then left alone for 30 seconds. Thereafter, a gauze, a glass plate, and a weight were piled up onto the test plate in order, and then they were left alone for 10 minutes, when it was arranged that the load should be 70 g/cm$^2$. Thereafter, the test plate was cooled to room temperature, and then the gauze was peeled off to observe the state of the coating film with the eye. The evaluation was made on the following standard.
The test results were classified by the following marks.
◎ : No abnormality (no trace of gauze)
○: Slight trace of gauze
Δ: Mesh trace of gauze
✕ : Difficult to peel off gauze

(Warm-water-whitening resistance):

Test plates for measuring the warm-water-whitening resistance were prepared by carrying out the same method as of the preparation of the test plate in the measurement of the aforementioned blocking resistance except to substitute aluminum plates.
The L values (L1) of the test plates as obtained were measured with a color difference meter, and thereafter the test plates were immersed in warm water of 60 ˚C for 7 days and 18 days respectively. Thereafter, the test plates were pulled up from the warm water, and then water remaining on the test plates was wiped up, and then their L values (L2) were measured. The whitening degree ΔL was defined as (L2 - L1), and the numerical value ranges of the ΔL were classified by the following marks to evaluate the whitening degree of the film.
○: Less than 4
Δ: 4 to 10 (but excluding 10)
✕ : Not less than 10

(Example 8):

An amount of 500.0 parts of the acrylic emulsion (2) as obtained in Production Example 2, 18.8 parts of ammonium zirconium carbonate (solid content: 20 % in terms of zirconium dioxide), and 0.6 part of tartaric acid were weighed out into a dispersing machine and then stirred in this dispersing machine at 2,000 r.p.m. for 5 minutes, thus obtaining an aqueous resin composition. To this aqueous resin composition as obtained, there was added 10.8 parts of a mixed solution of butyl cellosolve/texanol (trade name: CS-12, produced by Chisso Corporation) = 1/1, and the resultant mixture was stirred in the dispersing machine at 1,000 r.p.m. for 5 minutes, thus obtaining a clear paint composition (2).

Various evaluations were carried out in the same way as of Example 7 except to substitute the clear paint composition (2) as obtained. The results are listed in Table 3.

(Example 9):

An amount of 500.0 parts of the acrylic emulsion (3) as obtained in Production Example 3, 18.8 parts of ammonium zirconium carbonate (solid content: 20 % in terms of zirconium dioxide), and 0.6 part of tartaric acid were weighed out into a dispersing machine and then stirred in this dispersing machine at 2,000 r.p.m. for 5 minutes, thus obtaining an aqueous resin composition. To this aqueous resin composition as obtained, there was added 10.8 parts of a mixed solution of butyl cellosolve/texanol (trade name: CS-12, produced by Chisso Corporation) = 1/1, and the resultant mixture was stirred in the dispersing machine at 1,000 r.p.m. for 5 minutes, thus obtaining a clear paint composition (3).

Various evaluations were carried out in the same way as of Example 7 except to substitute the clear paint composition (3) as obtained. The results are listed in Table 3.

(Comparative Example 5):

To 500.0 parts of the acrylic emulsion (1) as obtained in Production Example 1, there was added 10.8 parts of a mixed solution of butyl cellosolve/texanol (trade name: CS-12, produced by Chisso Corporation) = 1/1, and the resultant mixture was stirred in the dispersing machine at 1,000 r.p.m. for 5 minutes, thus obtaining a comparative clear paint composition (1).

Various evaluations were carried out in the same way as of Example 7 except to substitute the comparative clear paint composition (1) as obtained. The results are listed in Table 3.

Table 3

| | Example 7 | Example 8 | Example 9 | Comparative Example 5 |
|---|---|---|---|---|
| | Clear paint composition (1) | Clear paint composition (2) | Clear paint composition (3) | Comparative clear paint composition (1) |
| Blocking resistance | ○ | ◎ | ○ | Δ |
| Warm-water-whitening resistance | | | | |
| after immersion for 7 days | ○ | ○ | ○ | ○ |
| after immersion for 18 days | ○ | ○ | ○ | ○ |

**Claims**

1. A resin composition which comprises a urethane resin and/or a resin as obtained by polymerizing a monomer component including an $\alpha,\beta$-unsaturated carboxylic acid as an essential component; ammonium zirconium carbonate as a multivalent metal compound in a mixing ratio of 0.1 to 50.0 weight% in the resin composition; and tartaric acid and/or its salt; wherein the mixing ratio of the tartaric acid and/or its salt is in a range of from 13.7 to 54.1 weight% relative to the weight of the metal atom in the multivalent metal compound.

2. A resin composition according to claim 1, which further comprises a cationic resin.

3. A resin composition according to claim 1 or 2, wherein the mixing ratio of the tartaric acid and/or its salt is in the range of from 20.4 to 47.3 weight% relative to the weight of the metal atom in the multivalent metal compound.

4. A resin composition according to any one of claims 1 to 3, wherein the mixing ratio of the tartaric acid and/or its salt is in the range of from 10.1 to 40.0 weight% relative to the solid content of the ammonium zirconium carbonate when its entirety is taken in terms of zirconium dioxide.

5. A resin composition according to claim 4, wherein the amount of tartaric acid and/or its salt is in the range of 15.1 to 35.0 weight% relative to the solid content of the ammonium zirconium carbonate when its entirety is taken in terms of zirconium oxide.

**Patentansprüche**

1. Harzzusammensetzung, die ein Urethanharz und/oder ein Harz, das durch Polymerisation einer eine $\alpha,\beta$-ungesättigte Carbonsäure als wesentliche Komponente enthaltenden Monomerkomponente erhalten wurde, Ammoniumzirconiumcarbonat als Verbindung eines mehrwertigen Metalls in einem Mischungsanteil von 0,1 bis 50,0 Gew.-% in der Harzzusammensetzung und Weinsäure und/oder deren Salz umfasst, wobei der Mischungsanteil der Weinsäure und/oder von deren Salz im Bereich von 13,7 bis 54,1 Gew.-%, bezogen auf das Gewicht des Metallatoms in der Verbindung eines mehrwertigen Metalls, liegt.

2. Harzzusammensetzung nach Anspruch 1, die ferner ein kationisches Harz umfasst.

3. Harzzusammensetzung nach Anspruch 1 oder 2, wobei der Mischungsanteil der Weinsäure und/oder von deren Salz im Bereich von 20,4 bis 47,3 Gew.-%, bezogen auf das Gewicht des Metallatoms in der Verbindung eines mehrwertigen Metalls, liegt.

4. Harzzusammensetzung nach einem der Ansprüche 1 bis 3, wobei der Mischungsanteil der Weinsäure und/oder von deren Salz im Bereich von 10,1 bis 40,0 Gew.-%, bezogen auf den Feststoffgehalt des Ammoniumzirconiumcarbonats, wenn dessen Gesamtmenge in Form von Zirconiumdioxid genommen wird, liegt.

5. Harzzusammensetzung nach Anspruch 4, wobei die Menge von Weinsäure und/oder deren Salz im Bereich von 15,1 bis 35,0 Gew.-%, bezogen auf den Feststoffgehalt des Ammoniumzirconiumcarbonats, wenn dessen Gesamtmenge in Form von Zirconiumoxid genommen wird, liegt.

**Revendications**

1. Composition de résine qui comprend une résine d'uréthane et/ou une résine obtenue en polymérisant un constituant monomère incluant un acide carboxylique $\alpha,\beta$-insaturé en tant que constituant essentiel ; du carbonate d'ammonium et de zirconium en tant que composé métallique multivalent dans un rapport de mélange de 0,1 à 50,0 % en poids dans la composition de résine ; et de l'acide tartrique et/ou son sel ; dans laquelle le rapport de mélange de l'acide tartrique et/ou son sel est dans la gamme de 13,7 à 54,1 % en poids par rapport au poids de l'atome de métal dans le composé métallique multivalent.

2. Composition de résine selon la revendication 1, qui comprend en outre une résine cationique.

3. Composition de résine selon la revendication 1 ou 2, dans laquelle le rapport de mélange de l'acide tartrique et/ou son sel est dans la gamme de 20,4 à 47,3 % en poids par rapport au poids de l'atome de métal dans le composé métallique multivalent.

4. Composition de résine selon l'une quelconque des revendications 1 à 3, dans laquelle le rapport de mélange de l'acide tartrique et/ou son sel est dans la gamme de 10,1 à 40,0 % en poids par rapport à la teneur en substances solides du carbonate d'ammonium et de zirconium lorsque sa globalité est prise en termes de dioxyde de zirconium.

5. Composition de résine selon la revendication 4, dans laquelle la quantité d'acide tartrique et/ou son sel est dans la gamme de 15,1 à 35,0 % en poids par rapport à la teneur en substances solides du carbonate d'ammonium et de zirconium lorsque sa globalité est prise en termes d'oxyde de zirconium.